# FASCICULE DE BREVET EUROPEEN

(11) **EP 2 800 906 B1**
(45) Date de publication et mention de la délivrance du brevet: **25.05.2016**
(21) Numéro de dépôt: 12815744.3
(22) Date de dépôt: 14.12.2012
(51) Int. Cl.: F04D 29/66, F02C 7/045, B64D 33/02, F01D 25/32, F04D 19/00

(54) **BANDES D'AMORTISSEMENT DE VIBRATIONS A EVACUATION DE FLUIDES, POUR PROTECTION ACOUSTIQUE DE CARTER DE SOUFFLANTE DE TURBOMACHINE D'AERONEF**
VERFAHREN ZUR SCHWINGUNGSDÄMPFUNG BEI FLÜSSIGKEITSENTLADUNGEN AUS EINEM FLUGZEUG-TURBOMASCHINEN-LÜFTERGEHÄUSE
FLUID DISCHARGE VIBRATION DAMPING STRIPS FOR ACOUSTIC PROTECTION OF AIRCRAFT TURBOMACHINE FAN CASING

(30) Priorité: 16.12.2011 FR 1161819
(43) Date de publication de la demande: 12.11.2014
(73) Titulaire: Snecma, 75015 Paris (FR)
(72) Inventeur: ROFFI, Guillaume, F-77550 Moissy-Cramayel Cedex (FR); TRAN, Julien, F-77550 Moissy-Cramayel Cedex (FR)
(74) Mandataire: Brevalex
(86) Numéro de dépôt international: PCT/FR2012/052938
(87) Numéro de publication internationale: WO 2013/088088

(56) Documents cités:
- WO-A2-2010/109152
- US-A- 3 542 152
- US-A- 4 751 979
- US-A- 4 926 963
- US-A1- 2006 219 475

## Description

### DOMAINE TECHNIQUE

L'invention se rapporte au montage d'une protection acoustique à l'intérieur d'un carter de soufflante de turbomachine d'aéronef. Plus particulièrement, l'invention concerne les bandes d'amortissement de vibrations prévues entre le carter de soufflante et les panneaux acoustiques.

L'invention s'applique à tous les types d'aéronef équipé d'un carter de soufflante, en particulier les turboréacteurs.

### ÉTAT DE LA TECHNIQUE ANTÉRIEURE

Sur les turboréacteurs actuels, comme par exemple dans les US 3 542 152 A, US 4 926 963 A ou US 4 751 979 A, des panneaux de protection acoustique
sont généralement assemblés sur la surface intérieure du carter de soufflante, tout autour de l'axe moteur. L'assemblage s'effectue habituellement par vissage des panneaux sur le carter.

Néanmoins, des risques de rupture de certaines vis de fixation des panneaux acoustiques ont été identifiés. En cas de rupture, les têtes de vis libérées dans la veine peuvent produire des endommagements importants sur les aubes de soufflante, après ingestion. Parmi les causes principales identifiées, figurent les fortes sollicitations vibratoires induites par la coïncidence entre un mode propre du panneau acoustique et une excitation des aubes de soufflante. Ces fortes sollicitations transmises aux vis provoquent leur desserrage, et sont susceptibles d'entraîner de fortes usures, pouvant éventuellement aller jusqu'à la rupture, comme évoqué ci-dessus.

Pour faire face à ce problème, il a été proposé d'introduire des bandes d'amortissement de vibrations afin de diminuer les niveaux vibratoires. Ces bandes, habituellement réalisées en matériau élastomère, présentent l'avantage d'amortir significativement les niveaux vibratoires mesurés en essais au niveau du panneau, lorsque ces bandes sont mises en compression.

Cependant, le matériau choisi peut être sensible au contact de liquides tels que l'huile et le kérosène, lorsqu'il est immergé pendant une longue durée. Ce contact prolongé avec de tels liquides peut en effet provoquer un risque de dégradation du matériau, et/ou une perte d'efficacité de l'amortissement obtenu. Or dans la zone amont du carter de soufflante où se trouvent les panneaux acoustiques, des écoulements d'huile ou de kérosène sont réellement possibles, en cas de fuite.

Normalement, ces fluides sont censés s'écouler jusqu'en partie basse du carter de soufflante, pour être ensuite évacués par un drain situé à 6h au niveau du carter.

Compte-tenu de l'orientation des bandes dans le sens de l'axe longitudinal du moteur, une rétention de ces liquides est alors possible sur certains chants des bandes, ce qui est susceptible d'induire un contact prolongé préjudiciable.

Pour faire face à cette problématique, il a été proposé différentes alternatives, comme la réalisation de rainures transversales dans les bandes pour évacuer les liquides.

Cependant, la présence de ces rainures peut fragiliser les bandes, en plus de diminuer la surface de contact avec le carter, ce qui conduit à une baisse d'efficacité. Par ailleurs, la présence de ces rainures peut également diminuer la raideur des bandes lorsqu'elles sont mises en compression, ce qui est également susceptible d'impacter leur capacité d'amortissement. Enfin, avec cette solution, des zones de rétention des liquides subsistent sur les chants, entre les rainures. Cette solution ne donne par conséquent pas entièrement satisfaction.

### EXPOSÉ DE L'INVENTION

L'invention a donc pour but de remédier au moins partiellement aux inconvénients mentionnés ci-dessus, relatifs aux réalisations de l'art antérieur.

Pour ce faire, l'invention a tout d'abord pour objet un dispositif de protection acoustique pour carter de soufflante de turbomachine d'aéronef, comprenant un panneau de protection acoustique formant un secteur de virole centré sur un axe central destiné à être confondu avec l'axe longitudinal du carter de soufflante, ledit dispositif comprenant également une ou plusieurs bandes d'amortissement de vibrations plaquées d'un côté contre la surface extérieure du panneau de protection acoustique et destinées à être plaquées de l'autre côté contre une surface intérieure du carter de soufflante, chaque bande d'amortissement présentant deux chants opposés présentant chacun une extrémité amont et une extrémité aval espacées l'une de l'autre selon la direction de l'axe central.

Selon l'invention, au moins l'un des deux chants opposés d'au moins l'une des bandes d'amortissement est conformé de sorte que du liquide présent sur ce chant puisse s'écouler par gravité en direction de l'une et/ou de l'autre de ses extrémités amont et aval.

L'invention apporte ainsi une solution simple et performante capable d'évacuer les liquides vers l'une et/ou l'autre des extrémités des chants susceptibles d'être mouillés par de tels liquides, comme de l'huile ou du kérosène.

Après cette évacuation en dehors des chants, permise par simple phénomène de gravité, les fluides peuvent s'écouler sur le carter de soufflante jusqu'en partie basse de ce dernier, ou niveau duquel ils sont préférentiellement évacués par un drain situé à 6h sur le carter.

Les bandes d'amortissement ne sont donc plus susceptibles d'être dégradées par la rétention prolongée de liquides sur leurs chants, ce qui permet de conserver une fonction d'amortissement performante dans la durée.

De préférence, l'aménagement spécifique à la présente invention est pratiqué sur chaque chant de chaque bande susceptible de collecter du fluide ruisselant par gravité sur la surface inférieure du carter, c'est-à-dire généralement un seul chant par bande, celui orienté vers le haut.

De préférence, au moins l'un des deux chants opposés d'au moins l'une des bandes d'amortissement présente au moins une portion inclinée par rapport à l'axe central, de manière à ce que du liquide présent sur cette portion puisse s'écouler par gravité en direction de l'une et/ou de l'autre de ses extrémités amont et aval. La portion inclinée est préférentiellement plane, mais peut alternativement être courbe. Chaque chant concerné peut ici n'inclure qu'une seule portion inclinée, de préférence constituant l'intégralité du chant.

Préférentiellement, au moins l'un des deux chants opposés d'au moins l'une des bandes d'amortissement est constitué de deux portions successives dans la direction de l'axe central, chacune de ces deux portions étant inclinée selon l'axe central de manière à ce que du liquide présent sur chacune des deux portions puisse s'écouler par gravité en direction respectivement de l'extrémité amont et de l'extrémité aval. Cela permet de répartir le liquide vers les deux extrémités amont et aval du chant concerné, et d'éviter un éventuel trop plein de liquide à l'une des extrémités, et un débordement dans la veine. Afin de répartir uniformément l'écoulement sur les deux extrémités de la bande, les deux portions inclinées, agencées en forme de V ouverts vers le bas, peuvent être symétriques.

A cet égard, l'angle formé entre les deux portions de chant est de préférence compris entre 1 et 15°, et plus préférentiellement entre 1 et 3°. Avec ces gammes de valeur, il est adopté un compromis permettant à la fois un bon écoulement des liquides par gravité, et une diminution négligeable de la surface de contact de la bande avec ses éléments adjacents.

Comme évoqué ci-dessus, les deux portions de chant sont de même longueur, et agencées symétriquement.

De préférence, au moins l'une des bandes d'amortissement est conformée de manière à pouvoir être montée sur le panneau acoustique selon deux positions de montage inversées, dans lesquelles les positions desdits deux chants opposés sont respectivement inversées, et dans chacune des deux positions de montage, au moins l'un des deux chants opposés de ladite bande d'amortissement est conformé de sorte que du liquide présent sur ce chant puisse s'écouler par gravité en direction de l'une et/ou de l'autre de ses extrémités amont et aval.

Cette solution évite les conséquences néfastes sur les bandes en cas d'erreur de montage, puisque dans les deux sens de montage, le chant susceptible de collecter des liquides, c'est-à-dire celui orienté vers le haut, sera en mesure de conduire les liquides par gravité jusqu'à l'une ou jusqu'aux deux extrémités de ce chant, pour assurer leur évacuation.

Dans le même esprit, et toujours dans l'optique d'éviter les conséquences néfastes sur les bandes en cas d'éventuelle erreur de montage, au moins l'une des bandes d'amortissement présente un premier plan de symétrie agencé entre les deux chants opposés. De préférence, toutes les bandes présentent une forme identique, ce qui simplifie encore davantage le montage.

Toujours de manière préférentielle, au moins l'une des bandes d'amortissement présente un second plan de symétrie traversant les deux chants opposés, lesdits premier et second plans de symétrie étant préférentiellement orthogonaux entre eux, et également orthogonaux au plan de la bande lorsque celle-ci présente une surface sensiblement plane.

Enfin, comme évoqué ci-dessus, chaque bande d'amortissement est de préférence réalisée en matériau élastomère.

L'invention a également pour objet une partie avant de turbomachine d'aéronef comprenant un carter de soufflante dont la surface intérieure est revêtue d'au moins un dispositif de protection acoustique tel que décrit ci-dessus.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 montre une vue en perspective d'un carter de soufflante de turboréacteur d'aéronef, équipé d'un dispositif de protection acoustique selon un mode de réalisation préféré de l'invention ;
- la figure 2 représente une vue en perspective du dispositif de protection acoustique montré sur la figure précédente, selon un angle permettant d'apercevoir sa surface intérieure ;
- les figures 3 et 4 représentent respectivement des vues en coupe prises le long des lignes III-III et IV-IV de la figure 2, respectivement ;
- la figure 5 représente une vue en perspective de l'une des bandes d'amortissement de vibrations équipant le dispositif de protection acoustique montré sur les figures précédentes ;
- la figure 6 représente une vue de côté d'une partie dispositif de protection acoustique montré sur les figures précédentes ; et
- la figure 7 représente une vue similaire à celle de la vue précédente, selon une alternative de réalisation.

### EXPOSÉ DÉTAILLÉ DE MODES DE RÉALISATION PRÉFÉRÉS

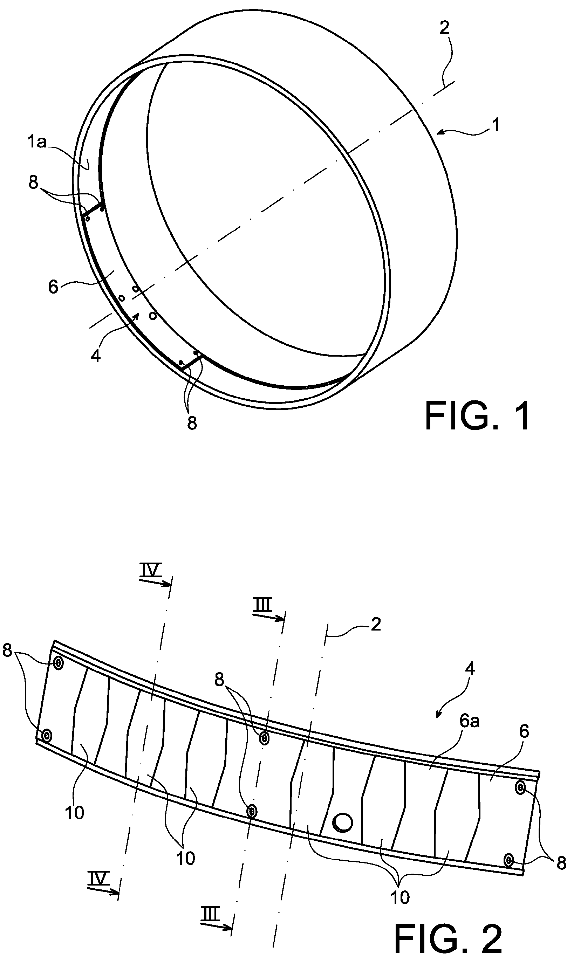

En référence tout d'abord à la figure 1, il est représenté un carter de soufflante 1 destiné à faire partie intégrante d'une partie avant d'un turboréacteur d'aéronef, de préférence à double flux et double corps.

Le carter adopte une forme classique de virole, d'axe longitudinal 2 correspondant à l'axe longitudinal de l'ensemble du turboréacteur.

A son extrémité amont, la surface intérieure 1a du carter 1a est équipée d'une pluralité de dispositifs de protection acoustique 4, seul l'un d'eux ayant été représenté sur la figure 1.

Ce dispositif 4 comporte un panneau de protection acoustique 6 formant un secteur de virole centré sur un axe central confondu avec l'axe longitudinal 4. Lorsque tous les dispositifs de protection sont installés sur le carter, leurs panneaux 6 situés dans la continuité les uns des autres selon la direction circonférentielle forment ensemble une couronne intérieure de protection acoustique.

Le panneau 6 est préférentiellement assemblé par vissage sur le carter, les vis de fixation 8 étant montées masqués dans le panneau afin de ne pas perturber l'écoulement aérodynamique de la veine.

Le dispositif 2 comprend également une ou plusieurs bandes d'amortissement de vibrations 10 plaquées d'un côté contre la surface extérieure 6a du panneau 6, et destinées à être plaquées de l'autre côté contre la surface intérieure 1a du carter 1.

Les bandes 10, espacées les unes des autres selon la direction circonférentielle, sont réalisées en matériau élastomère. Elles sont globalement orientées parallèlement à l'axe 2, c'est-à-dire qu'elles ont leur longueur parallèle à cet axe, et leur largeur orthogonale à ce même axe 2. Dans le mode de réalisation préféré représenté, chaque bande 10 présente une largeur faible, lui permettant de conserver une forme sensiblement plane, mais pourrait alternativement être courbe, sans sortir du cadre de l'invention.

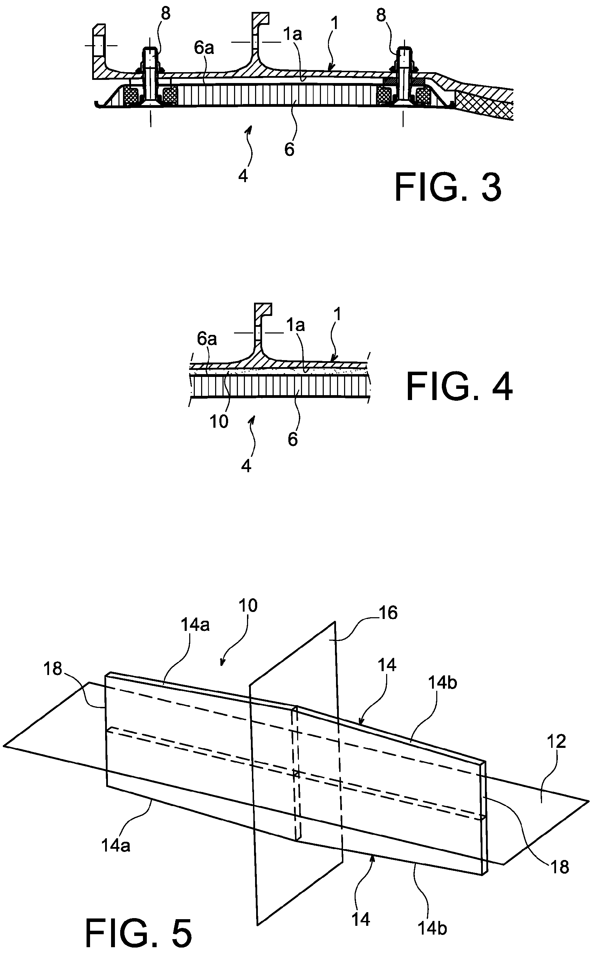

La figure 3 montre le panneau 6 assemblé sur le carter 1 par les vis 8, tandis que la figure 4 montre l'interposition de l'une des bandes amortisseuses 10 entre les deux surfaces 1a, 6a entre lesquelles cette bande est mise en compression afin de conférer sa fonction d'amortissement des vibrations.

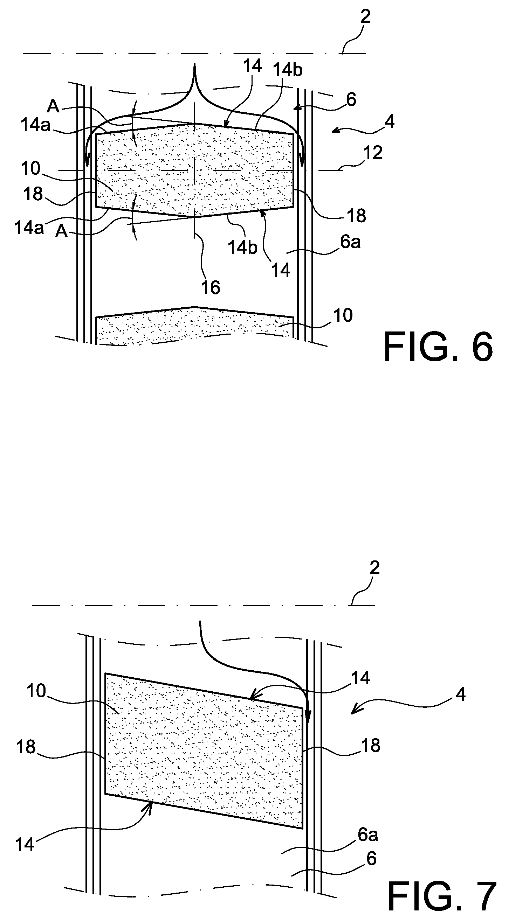

Les figures 5 et 6 montrent de manière plus précise l'une des bandes 10, ainsi que son agencement sur le carter. A cet égard, il est noté que pour des facilités de montage, toutes les bandes 10 du dispositif 4 sont prévues pour être identiques.

Ici, la bande 10 présente un premier plan de symétrie 12 orthogonal à l'axe 2, et correspondant à un plan médian passant entre les deux chants opposés les plus longs, dits chants longitudinaux 14. D'autre part, la bande 10 présente également un second plan de symétrie 16 orthogonal au premier plan 12, et correspondant à un plan médian passant entre les deux chants opposés les plus courts, dits chants transversaux 18. Les deux plans 12, 16 sont orthogonaux au plan de la bande 10, dont les chants transversaux 18 sont parallèles au premier plan 12. Par conséquent, en vue de côté telle que montrée sur la figure 6, les chants 18 sont considérés comme des chants verticaux.

L'une des particularités de la présente invention réside dans la forme des chants longitudinaux 14, qui ne sont pas orientés selon la direction de l'axe longitudinal 2, lui-même étant orienté horizontalement en fonctionnement. En effet, chaque chant longitudinal 14 s'étend entre une extrémité amont et une extrémité aval espacées l'une de l'autre selon la direction de l'axe central 2, en étant constituée de deux portions 14a, 14b successives dans la direction de ce même axe 2, inclinées l'une par rapport à l'autre, et chacune sensiblement plane. Les deux portions de chant longitudinal 14a, 14b, de longueur sensiblement identique, forment un angle compris de préférence entre 1 et 3°.

Il est noté que la bande d'amortissement 10 est conformée de manière à pouvoir être montée sur le panneau 6 selon deux positions de montage inversées, dans lesquelles les positions des deux chants longitudinaux opposés 14 sont respectivement inversées, c'est-à-dire que dans l'une des deux positions, l'un des chants se retrouve habituellement orienté vers le haut, alors qu'il est orienté dans vers le bas dans l'autre position. En raison de la symétrie de la bande 10 selon le premier plan 14, quel que soit le sens de montage adopté, la bande présente une même configuration sur le panneau 6. Il ne pas donc pas se produire d'erreur de montage, puisque dans les deux sens de montage, le chant longitudinal 14 susceptible de collecter des fuites de liquides, c'est-à-dire celui orienté vers le haut, sera en mesure de conduire les liquides par gravité jusqu'aux deux extrémités de ce chant, pour assurer leur évacuation.

En effet, en étant inclinée selon l'axe central 2 orienté horizontalement en fonctionnement, chacune des deux portions de chant 14a, 14b peut conduire par gravité du liquide collecté, par exemple une fuite d'huile et/ou de kérosène, vers l'extrémité de chant qu'elle intègre. En d'autres termes, une fois que le liquide circulant sur la surface intérieure 1a du carter se dépose sur le chant longitudinal 14 orienté vers le haut, il s'écoule par gravité vers l'extrémité amont ou aval de ce chant en étant confiné entre ce même chant, la surface extérieure 6a du panneau, et la surface intérieure 1a du carter. Après avoir atteint le chant amont ou aval transversal 18, le liquide peut ensuite s'écouler entre les deux surfaces 1a, 6a jusqu'en partie basse du carter de soufflante, pour être ensuite évacués par un drain (non représenté) situé à 6h au niveau du carter 1.

Chaque chant 14 orienté vers le haut s'apparente ainsi à une facette / à un bord permettant, grâce à son / ses inclinaisons par rapport à l'horizontale, l'évacuation des fuites de liquides à distance des bandes d'amortissement 10.

La figure 7 montre une alternative pour réaliser les bandes 10, prenant ici chacune la forme globale d'un parallélogramme avec chaque chant longitudinal 14 constituée d'une seule portion inclinée par rapport à l'axe central 2, de manière à former une pente dédiée au déversement de liquide vers l'une des extrémités du chant, ici l'extrémité aval.

Bien entendu, diverses modifications peuvent être apportées par l'homme du métier à l'invention qui vient d'être décrite, uniquement à titre d'exemples non limitatifs.

## Revendications

1. Dispositif de protection acoustique (4) pour carter de soufflante (1) de turbomachine d'aéronef, comprenant un panneau de protection acoustique (6) formant un secteur de virole centré sur un axe central (2) destiné à être confondu avec l'axe longitudinal du carter de soufflante, ledit dispositif comprenant également une ou plusieurs bandes d'amortissement de vibrations (10) plaquées d'un côté contre la surface extérieure (6a) du panneau de protection acoustique et destinées à être plaquées de l'autre côté contre une surface intérieure (1a) du carter de soufflante, chaque bande d'amortissement (10) présentant deux chants opposés (14) présentant chacun une extrémité amont et une extrémité aval espacées l'une de l'autre selon la direction de l'axe central (2),
**caractérisé en ce qu'**au moins l'un des deux chants opposés (14) d'au moins l'une des bandes d'amortissement (10) est conformé de sorte que du liquide présent sur ce chant puisse s'écouler par gravité en direction de l'une et/ou de l'autre de ses extrémités amont et aval.

2. Dispositif selon la revendication 1, **caractérisé en ce qu'**au moins l'un des deux chants opposés (14) d'au moins l'une des bandes d'amortissement (10) présente au moins une portion inclinée (14, 14a, 14b) par rapport à l'axe central (2), de manière à ce que du liquide présent sur cette portion puisse s'écouler par gravité en direction de l'une et/ou de l'autre de ses extrémités amont et aval.

3. Dispositif selon la revendication 2, **caractérisé en ce qu'**au moins l'un des deux chants opposés (14) d'au moins l'une des bandes d'amortissement (10) est constitué de deux portions successives (14a, 14b) dans la direction de l'axe central (2), chacune de ces deux portions étant inclinée selon l'axe central (2) de manière à ce que du liquide présent sur chacune des deux portions puisse s'écouler par gravité en direction respectivement de l'extrémité amont et de l'extrémité aval.

4. Dispositif selon la revendication 3, **caractérisé en ce que** l'angle formé entre les deux portions de chant (14a, 14b) est compris entre 1 et 15°, et plus préférentiellement entre 1 et 3°.

5. Dispositif selon la revendication 3 ou la revendication 4, **caractérisé en ce que** les deux portions de chant (14a, 14b) sont de même longueur.

6. Dispositif selon l'une quelconque des revendications précédentes, **caractérisé en ce qu'**au moins l'une des bandes d'amortissement (10) est conformée de manière à pouvoir être montée sur le panneau acoustique (10) selon deux positions de montage inversées, dans lesquelles les positions desdits deux chants opposés (14) sont respectivement inversées, et **en ce que** dans chacune des deux positions de montage, au moins l'un des deux chants opposés (14) de ladite bande d'amortissement (10) est conformé de sorte que du liquide présent sur ce chant puisse s'écouler par gravité en direction de l'une et/ou de l'autre de ses extrémités amont et aval.

7. Dispositif selon l'une quelconque des revendications précédentes, **caractérisé en ce qu'**au moins l'une des bandes d'amortissement (10) présente un premier plan de symétrie (12) agencé entre les deux chants opposés (14).

8. Dispositif selon l'une quelconque des revendications précédentes, **caractérisé en ce qu'**au moins l'une des bandes d'amortissement (10) présente un second plan de symétrie (16) traversant les deux chants opposés (14).

9. Dispositif selon l'une quelconque des revendications précédentes, **caractérisé en ce que** chaque bande d'amortissement (10) est réalisée en matériau élastomère.

10. Partie avant de turbomachine d'aéronef comprenant un carter de soufflante (1) dont la surface intérieure (1a) est revêtue d'au moins un dispositif de protection acoustique (4) selon l'une quelconque des revendications précédentes.

## Patentansprüche

1. Schallschutzvorrichtung (4) für ein Gebläsegehäuse (1) einer Flugzeugturbomaschine, umfassend ein Schallschutzpaneel (6), das einen Ringsektor bildet, der um eine Mittelachse (2), welche dazu bestimmt ist, mit der Längsachse des Gebläsegehäuses zusammenzufallen, zentriert ist, wobei die Vorrichtung auch einen oder mehrere Schwingungsdämpfungsstreifen (10) umfasst, die auf einer Seite gegen die Außenfläche (6a) des Schallschutzpaneels gedrückt und dazu bestimmt sind, auf der anderen Seite gegen eine Innenfläche (1a) des Gebläsegehäuses gedrückt zu werden, wobei jeder Dämpfungsstreifen (10) zwei gegenüberliegende Kanten (14) aufweist, die jeweils ein stromaufwärtiges Ende und ein stromabwärtiges Ende, welche in der Richtung der Mittelachse (2) voneinander beabstandet sind, aufweisen,
**dadurch gekennzeichnet, dass** wenigstens eine der beiden gegenüberliegenden Kanten (14) von wenigstens einem der Dämpfungsstreifen (10) derart gestaltet ist, dass auf dieser Kante vorhandene Flüssigkeit durch Schwerkraft in Richtung des einen und/oder des anderen ihrer stromauf- und stromabwärtigen Enden fließen kann.

2. Vorrichtung nach Anspruch 1, **dadurch gekennzeichnet, dass** wenigstens eine der beiden gegenüberliegenden Kanten (14) von wenigstens einem der Dämpfungsstreifen (10) wenigstens einen gegenüber der Mittelachse (2) geneigten Abschnitt (14, 14a, 14b) aufweist, so dass auf diesem Abschnitt vorhandene Flüssigkeit durch Schwerkraft in Richtung des einen und/oder des anderen ihrer stromauf- und stromabwärtigen Enden fließen kann.

3. Vorrichtung nach Anspruch 2, **dadurch gekennzeichnet, dass** wenigstens eine der beiden gegenüberliegenden Kanten (14) von wenigstens einem der Dämpfungsstreifen (10) von zwei in der Richtung der Mittelachse (2) aufeinanderfolgenden Abschnitten (14a, 14b) gebildet ist, wobei ein jeder dieser beiden Abschnitte entlang der Mittelachse (2) derart geneigt ist, dass auf jedem der beiden Abschnitte vorhandene Flüssigkeit durch Schwerkraft in Richtung des stromaufwärtigen Endes bzw. des stromabwärtigen Endes fließen kann.

4. Vorrichtung nach Anspruch 3, **dadurch gekennzeichnet, dass** der zwischen den beiden Kantenabschnitten (14a, 14b) gebildete Winkel zwischen 1 und 15° und bevorzugter zwischen 1 und 3° beträgt.

5. Vorrichtung nach Anspruch 3 oder Anspruch 4, **dadurch gekennzeichnet, dass** die beiden Kantenabschnitte (14a, 14b) gleich lang sind.

6. Vorrichtung nach einem der vorhergehenden Ansprüche, **dadurch gekennzeichnet, dass** wenigstens einer der Dämpfungsstreifen (10) derart gestaltet ist, dass er an dem Schalldämmpaneel (10) in zwei umgekehrten Montagepositionen, in denen die Positionen der beiden gegenüberliegenden Kanten (14) jeweils umgekehrt sind, angebracht werden kann, und dass in jeder der beiden Montagepositionen wenigstens eine der beiden gegenüberliegenden Kanten (14) des Dämpfungsstreifens (10) derart gestaltet ist, dass auf dieser Kante vorhandene Flüssigkeit durch Schwerkraft in Richtung des einen und/oder des anderen ihrer stromauf- und stromabwärtigen Enden fließen kann.

7. Vorrichtung nach einem der vorhergehenden Ansprüche, **dadurch gekennzeichnet, dass** wenigstens einer der Dämpfungsstreifen (10) eine erste Symmetrieebene (12), die zwischen den beiden gegenüberliegenden Kanten (14) angeordnet ist, aufweist.

8. Vorrichtung nach einem der vorhergehenden Ansprüche, **dadurch gekennzeichnet, dass** wenigstens einer der Dämpfungsstreifen (10) eine zweite Symmetrieebene (16), welche die beiden gegenüberliegenden Kanten (14) durchquert, aufweist.

9. Vorrichtung nach einem der vorhergehenden Ansprüche, **dadurch gekennzeichnet, dass** jeder Dämpfungsstreifen (10) aus Elastomermaterial gefertigt ist.

10. Vorderteil einer Flugzeugturbomaschine, umfassend ein Gebläsegehäuse (1), dessen Innenfläche (1a) mit wenigstens einer Schallschutzvorrichtung (4) nach einem der vorhergehenden Ansprüche überzogen ist.

## Claims

1. An acoustic protection device (4) for a fan casing (1) of an aircraft turbomachine, comprising an acoustic protection panel (6) forming a ferrule sector centered on a center axis (2) for being the same as the longitudinal axis of the fan casing, said device also comprising one or more vibration damping strips (10) pressed on one side to the external surface (6a) of the acoustic protection panel and for being pressed on the other side to an internal surface (1a) of the fan casing, each damping strip (10) having two opposites edges (14) each having an upstream end and a downstream end spaced from each other along the direction of the center axis (2),
**characterised in that** at least one of the two opposite edges (14) of at least one of the damping strips (10) is shaped such that liquid present in this edge can flow by gravity toward either or both of its upstream and downstream ends.

2. The device according to claim 1, **characterised in that** at least one of these two opposite edges (14) of at least one of the damping strips (10) has at least one portion (14, 14a, 14b) tilted with respect to the center axis (2), such that liquid present on this portion can flow by gravity toward either or both of its upstream and downstream ends.

3. The device according to claim 2, **characterised in that** at least one of the two opposite edges (14) of at least one of the damping strips (10) consists of two successive portions (14a, 14b) in the direction of the center axis (2), each of both portions being tilted along the center axis (2) such that liquid present on each of both portions can flow by gravity toward the upstream end and the downstream end respectively.

4. The device according to claim 3, **characterised in that** the angle formed between the two edge portions (14a, 14b) is between 1 and 15°, and more preferentially between 1 and 3°.

5. The device according to claim 3 or claim 4, **characterised in that** the two edge portions (14a, 14b) are the same length.

6. The device according to any of the preceding claims, **characterised in that** at least one of the damping strips (10) is shaped so as to be mountable on the acoustic panel (10) at two reversed mounting positions, wherein the positions of said two opposite edges (14) are respectively reversed, and **in that** in each of both mounting positions, at least one of both opposite edges (14) of said damping strip (10) is shaped such that liquid present on this edge can flow by gravity toward either of both of its upstream and downstream ends.

7. The device according to any of the preceding claims, **characterised in that** at least one of the damping strips (10) has a first plan of symmetry (12) arranged between the two opposite edges (14).

8. The device according to any of the preceding claims, **characterised in that** at least one of the damping strips (10) has a second plan of symmetry (16) passing through both opposite edges (14).

9. The device according to any of the preceding claims, **characterised in that** each damping strip (10) is made of an elastomeric material.

10. An aircraft turbomachine front part comprising a fan casing (1) the internal surface (1a) of which is coated with at least one acoustic protection device (4) according to any of the preceding claims.
